# EUROPÄISCHE PATENTSCHRIFT

(11) **EP 2 711 664 B1**
(45) Veröffentlichungstag und Bekanntmachung des Hinweises auf die Patenterteilung: **25.03.2020**
(21) Anmeldenummer: 13004438.1
(22) Anmeldetag: 12.09.2013
(51) Int. Cl.: G01B 11/02, G01B 5/00

(54) **Prüfvorrichtung und Verfahren zur Prüfung einer Außenoberfläche eines bruchgetrennten Werkstückes**
Test device and method for testing an exterior surface of a fracture-divided workpiece
Dispositif de contrôle et procédé de contrôle d'une surface extérieure d'une pièce séparée par rupture

(30) Priorität: 24.09.2012 DE 102012018776
(43) Veröffentlichungstag der Anmeldung: 26.03.2014
(73) Patentinhaber: Alfing Kessler Sondermaschinen GmbH, 73433 Aalen (DE)
(72) Erfinder: Diemer, Willi, 73434 Aalen (DE)
(74) Vertreter: Patentanwälte Bregenzer und Reule Partnerschaftsgesellschaft mbB

(56) Entgegenhaltungen:
- EP-A1- 2 423 639
- DE-A1-102006 048 030
- DE-A1-102007 053 814
- DE-A1-102009 020 980
- US-A- 5 416 590
- US-A- 5 748 322
- US-A1- 2008 307 872

## Beschreibung

Die Erfindung betrifft ein Verfahren zur Prüfung einer Außenoberfläche eines Werkstücks, insbesondere eines Motorbauteils, z. B. eines Pleuels, auf Ausbruch-Flächen, wobei sich die Außenoberfläche neben einer durch ein Bruchtrennen oder Cracken des Werkstücks erzeugten Bruchtrennfläche befindet. Ferner ist eine Prüfvorrichtung zu einer derartigen Prüfung einer Außenoberfläche eines Werkstücks Gegenstand der Erfindung.

Aus US 2008/0307872 A1 geht eine Prüfvorrichtung zur Ermittlung einer Stufe zwischen Teilen hervor, die durch Bruchtrennen voneinander getrennt sind und anschließend wieder zusammengesetzt wurden.

DE 10 2006 048 030 A1 betrifft eine Vorrichtung und ein Verfahren zur Ermittlung von Spaltmaß und Mündigkeit aneinander angrenzender Bauteile.

Es ist eine bekannte Technologie, Motorbauteile, zum Beispiel Pleuel, im Rahmen eines so genannten Crackens oder Brechens zu trennen, um die derart getrennten Teile, beispielsweise einen Pleueldeckel und einen Pleuelfuß, anschließend wieder zu fügen und z.B. mittels Schrauben zu verbinden. Damit der Bruchtrennvorgang kontrolliert abläuft, ist es üblich, in das jeweilige Werkstück eine oder mehrere Kerben einzubringen, beispielsweise mithilfe eines Lasers, was z.B. in DE 10 2007 053 814 A1 beschrieben ist.

Allerdings hat sich in der Praxis herausgestellt, dass die Werkstücke nicht in jedem Fall einwandfrei brechen. Beispielsweise bilden sich neben der eigentlichen Bruchtrennfläche an der Außenoberfläche des Werkstücks, beispielsweise des Pleuels, Ausbrüche aus. Die Bruchtrennlinie ist also beispielsweise ausgefranst. Wenn die beiden Werkstückteile wieder zusammengefügt werden, beispielsweise der Deckel des Pleuels wieder auf den Fuß des Pleuels aufgesetzt wird, ist an sich eine intakte, nahezu homogen ineinander übergehende Außenoberfläche im Bereich der Bruchtrennlinie gewünscht. Die Bruchtrennflächen sollen also über einen möglichst großen Bereich formschlüssig aufeinander zu liegen kommen, damit die beiden Werkstückteile wieder gut zusammen halten, wenn sie beispielsweise mittels einer Schraube aneinander fixiert werden.

Es ist bekannt, beispielsweise die Außenoberfläche zu beleuchten und auf diesem Wege festzustellen, ob Ausbrüche neben oder an der Bruchstelle vorhanden sind. Im Bereich von Ausbrüchen wird beispielsweise das Licht schlechter reflektiert als bei einer intakten Außenoberfläche, die beispielsweise glänzt oder in sonstiger Weise besser reflektiert. Ist jedoch die Werkstückoberfläche verschmutzt, funktioniert das Verfahren nicht. Außerdem können Fremdlichteinflüsse die Messung deutlich beeinträchtigen. Die Messresultate sind also nicht in jedem Fall zufriedenstellend. Es sind oft umfangreiche bauliche Maßnahmen notwendig, damit die Messung funktioniert, beispielsweise ein geschlossenes Gehäuse, in dem die Messung stattfindet.

Ein anderes Problem ergibt sich im Kontaktbereich zwischen den Bruchtrennflächen, d.h. dort wo eine erste und eine zweite Bruchtrennfläche eines ersten und eines zweiten Werkstückteils möglichst formschlüssig aufeinander zu liegen kommen sollen. Dieser Kontaktbereich ist an sich so ausgestaltet, dass die Oberflächentopographien beider Bruchtrennflächen exakt zueinander passen, so dass sie über einen großen, möglichst den ganzen Bereich formschlüssig aufeinander zu liegen kommen. In der Praxis treten auch hier Ausbrüche an der jeweiligen ersten und/oder zweiten Bruchtrennfläche auf, so dass die beiden Bruchtrennflächen dort nicht in Kontakt treten, wenn die Werkstückteile aneinander gefügt werden. Es können auch Kavitäten auftreten, d.h. dass beispielsweise eine Art Vorsprung im Sinne eines Überlappens vor die Bruchtrennfläche des einen Werkstückteils vorsteht. Wenn die Bruchtrennflächen aneinander gefügt werden, bricht der überlappende Vorsprung ab und gelangt im günstigsten Fall in die darunter liegende Kavität, wo er nicht stört. Oft wird der abgebrochene Vorsprung jedoch wie eine Art Sandkorn von der Kavität weg weiter bewegt, so dass andere, neben der Kavität befindliche Bereiche der beiden Bruchtrennflächen nicht mehr flächig aufeinander zu liegen kommen, sondern durch das "Sandkorn" sozusagen auf Abstand gehalten werden.

Es ist daher die Aufgabe der vorliegenden Erfindung, eine verbesserte Prüfvorrichtung und ein verbessertes Verfahren zur Prüfung einer Außenoberfläche eines Werkstücks neben einer Bruchtrennfläche bereitzustellen.

Zur Lösung der Aufgabe ist ein Prüfverfahren gemäß der technischen Lehre des Anspruchs 1 vorgesehen.

Die Vergleichseinrichtung ist zum Auslösen einer Folgeaktion in Abhängigkeit davon vorgesehen, ob bezüglich eines vorbestimmten Bereichs der zu prüfenden Außenoberfläche die Außenoberflächen-Ist-Konturwerte um ein ein vorbestimmtes Maß und/oder ein einen Ausbruch charakterisierendes Maß von den Außenoberflächen-Soll-Konturwerten abweichen oder bei der Stetigkeitsanalyse ein einen Ausbruch charakterisierender Unstetigkeitsverlauf der Außenoberflächen-Ist-Konturwerte festgestellt wird.

Das Werkstück ist beispielsweise ein Pleuel, bei dem durch Bruchtrennen ein Deckel von einem Pleuelfuß abgetrennt wird.

Das den Ausbruch charakterisierende Maß kann zum Beispiel ein vorbestimmtes Maß sein. Die Vergleichseinrichtung ist also zum Auslösen einer Folgeaktion in Abhängigkeit davon vorgesehen, ob ob bezüglich eines vorbestimmten Bereichs der zu prüfenden Außenoberfläche die Außenoberflächen-Ist-Konturwerte um ein vorbestimmtes, z.B. ein einen Ausbruch charakterisierendes, Maß von den Außenoberflächen-Soll-Konturwerten abweichen.

Der Ausbruch entsteht also beispielsweise durch das Bruchtrennen. Unter einem Ausbruch wird vorzugsweise verstanden, dass eine durch Bruchtrennen verursachten Vertiefung gegenüber der Umgebung des Ausbruchs, also der Außenoberfläche neben dem Ausbruch vorhanden ist. Ein Ausbruch kann z.B. eine Art Krater sein. Der Ausbruch kann aber auch durch eine ungeschickte Positionierhandlung entstehen, das heißt dass die Außenoberfläche beispielsweise beim Fügen der voneinander bruchgetrennten Komponenten des Werkstücks beschädigt wird und ein Teil davon abbricht.

Ein Ausbruch ist in diesem Sinne also nicht, wenn beispielsweise die voneinander getrennte Komponenten des Werkstücks mit einem Versatz wieder aneinandergefügt werden. Das den Ausbruch charakterisierende Maß oder der Unstetigkeitsverlauf entspricht also einer Vertiefung gegenüber der Umgebung und nicht einem Versatz zwischen zwei aneinandergefügten Komponenten des Werkstücks, wenn diese nicht exakt zueinander passen oder nicht richtig zueinander positioniert sind, zum Beispiel seitlich verschoben sind. Die Prüfvorrichtung ist vorteilhaft dazu ausgestaltet, ein Versatz-Maß oder einen Versatz-Unstetigkeitsverlauf an sich schon zu ermitteln, und erfindungsgemäß dazu ausgestaltet, das den Ausbruch charakterisierende Maß oder den den Ausbruch charakterisierenden Unstetigkeitsverlauf von einem durch einen seitlichen Versatz von aneinandergefügten Komponenten des bruchgetrennten Werkstücks verursachten Versatz-Maß oder Versatz-Unstetigkeitsverlauf zu unterscheiden.

Der Unstetigkeitsverlauf wird also beispielsweise dadurch erkannt, dass die Prüfvorrichtung den Verlauf der Umgebung um den Ausbruch bzw. der Außenoberfläche um den möglichen Ausbruch über den Bereich des potentiellen Ausbruchs hinweg extrapoliert, sozusagen oberhalb des möglichen Ausbruchs eine virtuelle unbeschädigte Fläche rechnerisch erzeugt und durch Abweichung der Ausbruchkontur von dieser virtuellen unbeschädigten Fläche den Ausbruch erkennt. Selbstverständlich sind auch Toleranz möglich, das heißt dass bei geringen Abweichungen von der virtuell berechneten unbeschädigten Fläche noch kein Fehler festgestellt wird.

Es ist möglich, dass diese virtuelle Operation bei jeder Überprüfung durchgeführt wird, so dass geringe Abweichungen von Werkstücke zu Werkstück auf diesem Wege nicht zu Fehlern führen, sondern dass sozusagen für jedes Werkstück eine virtuelle unbeschädigte Fläche ermittelt wird, mit welcher die Istkontur im Bereich des möglichen Ausbruches verglichen wird.

Die Prüfvorrichtung umfasst vorzugsweise eine Aussonderungseinrichtung zum Aussondern des Werkstücks, wenn von der Vergleichseinrichtung bezüglich eines vorbestimmten Bereichs der zu prüfenden Außenoberfläche die Außenoberflächen-Ist-Konturwerte um ein vorbestimmtes Maß von den Außenoberflächen-Soll-Konturwerten abweichen oder bei der Stetigkeitsanalyse ein einen Ausbruch charakterisierender Unstetigkeitsverlauf der Außenoberflächen-Ist-Konturwerte festgestellt wird.

Die Prüfvorrichtung kann auch eine Markiereinrichtung zum Markieren eines Werkstücks umfassen, wenn dieses nicht die gewünschten Eigenschaften hat, also der Ausbruch ermittelt worden ist. Bei der Markierung kann es sich beispielsweise um eine optische Markierung, einen Aufkleber, eine Gravur oder dergleichen handeln. Die Markierung kann auch an einem Werkstückträger, der das Werkstück hält, angeordnet werden. Die Markierung kann aber auch eine sozusagen virtuelle Markierung sein, d.h. dass beispielsweise in einem Speicher einer Steuerungseinrichtung der Prüfvorrichtung oder der damit ausgestatteten Werkzeugmaschine für das jeweilige ausgesonderte Werkstück eine entsprechende Speichermarkierung gesetzt wird.

Die Folgeaktion kann umfassen, dass eine Speichermarkierung gesetzt wird und/oder das Werkstück nachbearbeitet wird und/oder ausgesondert wird.

Die Folgeaktion kann beispielsweise heißen, dass das Werkstück, das nicht in Ordnung ist, vernichtet wird, oder auch nachbearbeitet wird.

Das erfindungsgemäße Verfahren zur Prüfung einer Außenoberfläche eines Werkstücks, insbesondere eines Motorbauteils, z. B. eines Pleuels, auf Ausbruch-Flächen, wobei sich die Außenoberfläche neben einer durch ein Bruchtrennen oder Cracken des Werkstücks erzeugten Bruchtrennfläche befindet, unter Zuhilfenahme der Prüfvorrichtung nach einem der Ansprüche 1 bis 13, sieht vor: Erfassen einer Außenoberflächenkontur der Außenoberfläche anhand einer Sensoranordnung, wobei mindestens ein Sensor der Sensoranordnung die Außenoberflächenkontur kennzeichnende Außenoberflächen-Ist-Konturwerte ermittelt, Vergleichen der Außenoberflächen-Ist-Konturwerte mit Außenoberflächen-Soll-Konturwerten und/oder Durchführen einer Stetigkeitsanalyse bezüglich der Außenoberflächen-Soll-Konturwerte anhand einer Vergleichseinrichtung, und Auslösen einer Folgeaktion, insbesondere Aussondern des Werkstücks anhand einer Aussonderungseinrichtung, in Abhängigkeit davon, ob bezüglich eines vorbestimmten Bereichs der zu prüfenden Außenoberfläche die Außenoberflächen-Ist-Konturwerte um ein vorbestimmtes Maß und/oder einen Ausbruch charakterisierendes Maß von den Außenoberflächen-Soll-Konturwerten abweichen oder bei der Stetigkeitsanalyse ein einen Ausbruch charakterisierender Unstetigkeitsverlauf der Außenoberflächen-Ist-Konturwerte festgestellt wird.

Es ist ein Grundgedanke der vorliegenden Erfindung, dass anstelle einer einfachen optischen Kontrolle ein Prüfverfahren bereitgestellt wird, das quasi die Topographie der Außenoberfläche neben der Bruchtrennfläche misst oder überprüft. Die Oberfläche des Werkstücks wird beispielsweise über einen zweidimensionalen Laser-Wege-Sensor abgetastet. Die Rohdaten der Außenoberfläche werden auf die Vergleichseinrichtung, beispielsweise einen Computer oder ein Auswertemodul auf einem derartigen Computer übertragen. Die Messung erfolgt beispielsweise derart, d.h. dass die Außenoberfläche mit einem Linienraster eingescannt wird.

Beispielsweise wird die Außenoberfläche in einem definierten Bereich, der zu überprüfen ist, sozusagen abgetastet bzw. die Außenoberfläche wird quasi eingescannt. Die Außenoberflächen-Ist-Konturwerte sind beispielsweise Zahlenwerte, die der Oberflächentopographie der überprüften Außenoberfläche entsprechen.

Man kann das Werkstück und/oder den mindestens einen Sensor bewegen, um eine Relativbewegung zwischen Werkstück und dem mindestens einen Sensor herzustellen. Auf diesem Wege kann die gesamte zu überprüfende Oberfläche abgetastet werden. Die Bewegung erfolgt beispielsweise entsprechend dem Erfassungsbereich des Sensors.

Es ist möglich, dass der mindestens eine Sensor Außenoberflächen-Ist-Konturwerte betreffend die komplette, zu überprüfende Außenoberfläche des Werkstücks an die Vergleichseinrichtung sendet, welche dann anhand des Verlaufes bzw. einer Änderung der Außenoberflächen-Ist-Konturwerte erkennt, ob ein Ausbruch an der Außenoberfläche vorhanden ist und, wenn ja, welche Dimension dieser Ausbruch hat. Das kann z.B. im Rahmen der oben genannten Stetigkeitsanalyse erfolgen.

Beispielsweise werden die Rohdaten korrelierend mit einem Abstand des mindestens einen Sensors zur zu erfassenden Außenoberfläche ausgewertet, das heißt beispielsweise die Oberflächen-Ist-Konturwerte ermittelt, und ein Oberflächenprofil oder Höhenprofil der Werkstück-Außenoberfläche erstellt.

Im Höhenprofil können beispielsweise Vertiefungen, also Ausbrüche, ermittelt werden, indem die Außenoberflächen-Soll-Konturwerte mit Außenoberflächen-Ist-Konturwerten verglichen werden. Das kann beispielsweise der Computer oder ein von einem Prozessor ausführbares Programmcode enthaltendes Vergleichsmodul, z.B. eine Auswertesoftware, leisten. Wenn die Außenoberflächen-Ist-Konturwerte von den Außenoberflächen-Soll-Konturwerten um ein vorbestimmtes Maß abweichen und dies auch in einem vorbestimmten Bereich, nämlich einer maximal zulässigen Fläche eines Ausbruches oder einer Vertiefung, sondert die Prüfvorrichtung das Werkstück aus.

Beispielsweise sendet die Prüfvorrichtung ein entsprechendes Aussonderungssignal an ein Handhabungswerkzeug oder eine sonstige Einrichtung einer Werkzeugmaschine oder eines Bearbeitungszentrums.

Die Vergleichseinrichtung oder die Aussonderungseinrichtung kann beispielsweise dazu vorgesehen sein, ein Werkstück zu markieren, damit es später durch eine entsprechende Handhabungseinrichtung ausgesondert wird oder einer weiteren Bearbeitung zugeführt wird, beispielsweise nachbearbeitet wird. Es ist zum Beispiel möglich, dass die durch die Vergleichseinrichtung als nicht in Ordnung erkannte Oberfläche nachbearbeitet wird, zum Beispiel Ausbrüche kompensiert werden oder Überlappungen oder sonstige störende Vorsprünge später wieder entfernt werden, damit das Werkstück wieder in Ordnung ist. Mithin kann also die Vergleichseinrichtung oder die Aussonderungseinrichtung lediglich so ausgestaltet sein, dass sie beispielsweise ein Aussonderungssignal versendet, zum Beispiel an eine der Prüfvorrichtung nachgelagerte Arbeitsstation eines Bearbeitungszentrums oder dergleichen, oder in einem Speicher einer Steuerung eine Markierung für das Werkstück setzt.

Die Aussonderungseinrichtung kann auch ein Bestandteil der Vergleichseinrichtung sein. Beispielsweise sendet die Vergleichseinrichtung, z.B. ein entsprechender Computer oder ein die Vergleichseinrichtung bildendes Auswertemodul, eine Nachricht, zum Beispiel mittels eines Feldbusprotokolls, in der angegeben ist, welchen Zustand die geprüfte Oberfläche oder die geprüften Oberflächen haben, wobei diese Nachricht dann beispielsweise von einer Station zum Aussondern des Werkstücks und/oder zum Nachbearbeiten des Werkstücks und/oder zum regelmäßigen Weiterbearbeiten des Werkstücks empfangen werden kann.

Unter einem solchen "Aussonderungssignal" kann auch verstanden werden, dass das jeweilige Werkstück als in Ordnung gekennzeichnet wird, d.h. dass es eigentlich gar nicht auszusondern ist, sondern weiter bearbeitet werden kann bzw. in Ordnung ist.

Der Schritt des Aussonderns des Werkstücks kann also einfach auch bedeuten, dass die Vergleichseinrichtung oder die Aussonderungseinrichtung eine Aussonderungsinformation zum Aussondern oder nicht Aussondern des Werkstücks generiert.

Selbstverständlich kann die Vergleichseinrichtung oder die Aussonderungseinrichtung auch mechanische Komponenten enthalten, beispielsweise zum Wegfördern eines nicht brauchbaren Werkstücks, zum Nachbearbeiten oder dergleichen.

Die erfindungsgemäße Messung kann vor dem Zusammenfügen der Werkstückteile erfolgen, das heißt noch bevor die Werkstückteile miteinander verbunden werden, wird die Außenoberfläche nahe der Bruchtrennfläche auf mögliche Ausbrüche überprüft. Es ist aber auch möglich, dass die Messung erst dann erfolgt, wenn die Werkstückteile formschlüssig aufeinander liegen und eine im Prinzip homogene Außenoberfläche im Bereich der Bruchtrennlinie gewünscht ist. Dann kommt es auf den exakten Verlauf der Bruchtrennlinie nicht an.

Die Prüfvorrichtung ist vorzugsweise dazu ausgestaltet, in einem Bereich nahe einer Bruchtrennlinie zwischen der Außenoberfläche des Werkstücks und der Bruchtrennfläche eine genauere Erfassung der Außenoberflächenkontur der Außenoberfläche durchzuführen als an einem von der Bruchtrennlinie weiter entfernten Bereich der Außenoberfläche . Somit wird also im Bereich der Bruchtrennung eine exaktere bzw. genauere Überprüfung der Außenoberfläche durchgeführt. Dort können Ausbrüche besonders kritisch sein. Es ist auch möglich, dass genau das Umgekehrte stattfindet, d.h. die Überprüfung der Außenoberflächenkontur im Bereich der Bruchtrennlinie weniger genau erfolgt, weil dort noch bis zu einem gewissen Maß Ausbrüche erlaubt sind, während weiter von der Bruchtrennlinie entfernt die Außenoberfläche intakt sein muss.

Eine bevorzugte Ausführungsform der Erfindung, die eine an sich eigenständige Erfindung darstellen kann, sieht vor, dass sie zur Prüfung von durch Bruchtrennen oder Cracken erzeugten Bruchtrennflächen des Werkstücks ausgestaltet ist, wobei die Bruchtrennflächen eine erste Bruchtrennfläche an einem ersten Werkstückteil des Werkstücks und eine zum formschlüssigen Fügen an die erste Bruchtrennfläche vorgesehene zweite Bruchtrennfläche an einem zweiten Werkstückteil des Werkstücks umfassen, wobei die Sensoranordnung zum Erfassen der Bruchtrennoberflächenkonturen der ersten Bruchtrennfläche und der zweiten Bruchtrennfläche innerhalb eines Kontaktbereichs, in welchem die Bruchtrennflächen formschlüssig aufeinander liegen sollen, ausgestaltet ist und mindestens einen Sensor zum Ermitteln von die Bruchtrennoberflächenkontur der ersten Bruchtrennfläche in dem Kontaktbereich kennzeichnenden ersten Bruchtrennoberflächen-Ist-Konturwerten und von die Bruchtrennoberflächenkontur der zweiten Bruchtrennfläche in dem Kontaktbereich kennzeichnenden zweiten Bruchtrennoberflächen-Ist-Konturwerten aufweist, und wobei die Vergleichseinrichtung zum Vergleichen der ersten und der zweiten Bruchtrennoberflächen-Ist-Konturwerte ausgestaltet ist, und wobei die Aussonderungseinrichtung zum Aussondern des Werkstücks ausgestaltet ist, wenn bezüglich des Kontaktbereichs der Bruchtrennflächen, in welchem die Bruchtrennflächen aufeinander formschlüssig liegen sollen, die ersten und zweiten Bruchtrennoberflächen-Ist-Konturwerte um ein vorbestimmtes Maß voneinander abweichen.

Der Vorteil dieser Ausführungsform ist es, dass die Prüfvorrichtung nicht nur die Außenoberfläche neben den Bruchtrennflächen erfasst, sondern auch die Bruchtrennflächen, bevor die Werkstückteile wieder aneinandergefügt werden. Ein und dieselbe Sensoranordnung kann also beides leisten, nämlich die Überprüfung der Bruchtrennflächen und die Überprüfung mindestens einer Außenoberfläche des einen und/oder des anderen Werkstückteils.

Es können für beide Überprüfungen, die der Bruchtrennflächen und die der mindestens einer Außenoberfläche, unterschiedliche Sensoranordnungen, unterschiedliche Positioniereinrichtungen, unterschiedliche Vergleichseinrichtungen und unterschiedliche Aussonderungseinrichtungen vorgesehen sein. Es ist jedoch vorteilhaft, wenn für beide Oberflächenüberprüfungen ein und dieselbe Einrichtung verwendet wird, das heißt dass beispielsweise die Positioniereinrichtung die Sensoranordnung zunächst an der zu prüfenden Bruchtrennfläche positioniert und anschließend an der zu überprüfenden Außenoberfläche . Es ist also quasi eine Synergie vorhanden.

Die nachfolgenden Ausführungen beziehen sich also sowohl auf diejenige Ausführungsform, bei der die Prüfvorrichtung nur die Außenoberfläche neben der Bruchtrennfläche des Werkstücks überprüft, aber auch auf diejenige Ausführungsform, bei der die Prüfvorrichtung auch die Überprüfung der Bruchtrennflächen vornimmt.

Die Bruchtrennoberflächen-Ist-Konturwerte und/oder die Außenoberflächen-Ist-Konturwerte stellen zweckmäßigerweise ein Höhenprofil der jeweiligen Oberfläche, der Bruchtrenn-Oberfläche oder der Außenoberfläche, dar.

Die Sensoranordnung umfasst als den mindestens einen Sensor beispielsweise einen Abstandssensor zur Erfassung eines Abstands zwischen der zu prüfenden Oberfläche und dem Sensor. Der vom Sensor erfassten Abstand zwischen der zu prüfenden Oberfläche und dem Sensor ist ein Maß für den jeweiligen Oberflächen-Ist-Konturwert.

Die Prüfvorrichtung ist vorzugsweise dazu ausgestaltet, die jeweiligen Sensorwerte zu normalisieren. So kann z.B. vorgesehen sein, dass beispielsweise die Vergleichseinrichtung die vom Abstandssensor erzeugten Abstandswerte auf einen Normal-Abstand zwischen Sensor und zu prüfender Oberfläche normalisiert.

Der Abstandssensor kann beispielsweise ein induktiver Sensor sein, ein Lasersensor oder dergleichen sein.

Bevorzugt ist es, wenn ein Signalgeber zum Senden eines Prüfsignals zur zu überprüfenden Oberfläche und der mindestens eine Sensor, der zur Erfassung eines von dem Prüfsignal abhängigen Messsignals vorgesehen ist, in einem gemeinsamen Sensorgehäuse angeordnet sind. Dadurch wird eine optimale Präzision erzielt. Das Prüfsignal ist beispielsweise ein Laserlicht, ein Magnetfeld oder dergleichen. Der Signalgeber umfasst also beispielsweise eine Laserlichtquelle und/oder einen Magnetfelderzeuger. Das Meldesignal wird beispielsweise durch ein Magnetfeld gebildet, das durch die zu überprüfende Oberfläche beeinflusst ist. Das Meldesignal kann aber auch beispielsweise durch den reflektierten Laserstrahl der Laserlichtquelle gebildet sein.

Jedenfalls ist es vorteilhaft, wenn der mindestens eine Sensor zur berührungslosen Erfassung der zu prüfenden Oberfläche ausgestaltet ist.

Eine alternativ oder ergänzend mögliche Ausführungsform der Erfindung sieht vor, dass der mindestens eine Sensor einen Tastsensor zum Abtasten der zu prüfendenden Oberfläche umfasst. Es ist also auch eine berührungsbehaftete Erfassung der Oberfläche möglich, beispielsweise der Außenoberfläche und/oder der Bruchtrennfläche.

Selbstverständlich ist auch jede beliebige Kombinationen von Sensoren möglich, d.h. dass die Sensoranordnung beispielsweise induktive Sensoren und Lasersensoren umfasst. Ferner können bei der Sensoranordnung auch berührungslose und berührungsbehaftete Sensoren kombiniert werden. Wenn Sensoren mit unterschiedlichen Messprinzipien verwendet werden, kann eine höhere Messqualität erzielt werden. Beispielsweise können die Fehler des einen Sensors durch einen anderen Sensor kompensiert werden.

Die Sensoranordnung kann auch beispielsweise eine Anordnung von mehreren Sensoren, zum Beispiel mindestens zwei - insbesondere gleichartigen - Sensoren umfassen, z.B. mindestens zwei Lasersensoren oder mindestens zwei induktiven Sensoren. Die Erfassungsbereiche der Sensoren sind nebeneinander angeordnet. Die Erfassungsbereiche können sich überlappen oder nicht. Mithin können die Erfassungsbereiche auch so ausgestaltet sein bzw. so angeordnet sein, dass eine flächige Erfassung möglich ist.

Eine vorteilhafte Ausführungsform sieht eine Positioniereinrichtung zum Positionieren des mindestens einen Sensors und des zu prüfenden Werkstücks relativ zueinander vor. Beispielsweise kann eine Halterung für das Werkstück relativ zu dem mindestens einen Sensor bewegt werden. Es ist aber auch möglich, das der Sensor relativ zum Werkstück bewegt wird, d.h. dass beispielsweise eine Sensor-Stelleinrichtung vorhanden ist.

Beispielsweise ist eine Werkstück-Positioniereinrichtung zum Positionieren des Werkstücks und/oder eine Sensor-Positioniereinrichtung zum Positionieren des mindestens einen Sensors vorgesehen.

Die Positioniereinrichtung ist vorzugsweise dazu ausgestaltet, den mindestens einen Sensor und das zu prüfende Werkstück so zueinander zu positionieren, dass der mindestens eine Sensor die zu prüfende Oberfläche zeilenweise und/oder punktweise und/oder flächig und/oder matrixartig erfasst. Beispielsweise wird die Oberfläche sozusagen zeilenweise eingescannt. Die Positioniereinrichtung kann die Sensoranordnung und/oder das Werkstück auch zu einer flächigen oder matrixartigen Erfassung der zu prüfenden Oberfläche durch die Sensoranordnung relativ zueinander positionieren.

Der mindestens eine Sensor ist zweckmäßigerweise in einem Schutzgehäuse angeordnet. Bevorzugt ist vorgesehen, dass das Schutzgehäuse eine Abdeckung aufweist, die während des Messvorgangs geöffnet ist, jedoch zum Schutz des mindestens einen Sensors oder der Sensoranordnung als Ganzes geschlossen werden kann.

Weiterhin ist es zweckmäßig, dass eine Sperrluft-Anordnung vorgesehen ist, d.h. dass beispielsweise eine Luftausblasdüse neben dem mindestens einen Sensor angeordnet ist, um diesen vor Verschmutzung zu schützen.

Selbstverständlich kann auch eine Auslassöffnung einer Reinigungsdüse vorgesehen sein, so dass beispielsweise die zu prüfende Oberfläche vor oder im Zusammenhang mit der Messung durch den mindestens einen Sensor gereinigt wird.

An dieser Stelle sei bemerkt, dass die Prüfvorrichtung einen Bestandteil einer Werkzeugmaschine bildet oder als eine Werkzeugmaschine zur Bearbeitung eines Werkstücks ausgestaltet ist. Alternativ ist ein mehrere Stationen umfassendes Bearbeitungszentrum zur Bearbeitung von Motorbauteilen, beispielsweise zur Pleuel-Bearbeitung, mit der Prüfvorrichtung versehen bzw. die Prüfvorrichtung bildet einen Bestandteil eines solchen Bearbeitungszentrums. Das Bearbeitungszentrum weist beispielsweise zusätzliche Stationen zum Cracken, Fügen, Verschrauben und dergleichen weiterer Bearbeitung des Werkstücks auf.

Die Prüfvorrichtung kann auch eine individuelle Baueinheit bilden oder eine Prüfstation darstellen, muss also nicht unbedingt in eine Werkzeugmaschine integriert sein oder einen Bestandteil eines Bearbeitungszentrums bilden.

Das zu überprüfende Werkstück ist beispielsweise ein Gussteil, ein Schmiedeteil oder auch ein Sinterteil. Dementsprechend ist sie zu überprüfende Oberfläche beispielsweise eine Gussoberfläche oder eine Bruchtrenn-Oberfläche, die sich beim Bruchtrennen eines Gussteils ausbildet. Auch eine relativ glatte Schmiedeoberfläche oder eine Sinteroberfläche können die zu überprüfende Außenoberfläche oder die durch das Bruchtrennen hergestellte Bruchtrennfläche darstellen.

Die Bruchtrennfläche und die Außenoberfläche sind beispielsweise zueinander winkelig, beispielsweise rechtwinkelig oder etwa rechtwinkelig. Die Außenoberfläche verläuft also beispielsweise winkelig neben der durch das Bruchtrennen oder Cracken des Werkstücks erzeugten Bruchtrennfläche.

Nachfolgend werden Ausführungsbeispiele der Erfindung anhand der Zeichnung erläutert. Es zeigen:
- Figur 1: eine schematisch dargestellte Werkzeugmaschine mit einer Bruchtrennvorrichtung und einer Prüfvorrichtung sowie einem Pleuel,
- Figur 2: die Anordnung gemäß Figur 1, jedoch mit einer anderen Sensoranordnung,
- Figur 3: eine schematische Darstellung eines Werkstücks mit einem ersten und einem zweiten Werkstückteil, deren Bruchtrennflächen optimal zueinander passen,
- Figur 4: eine schematische Darstellung eines Werkstücks mit einem ersten und einem zweiten Werkstückteil, wobei an der Bruchtrennfläche des einen Werkstückteils einen Ausbruch vorhanden ist,
- Figur 5: eine schematische Darstellung eines Werkstücks mit einem ersten und einem zweiten Werkstückteil, wobei an der Bruchtrennfläche des einen Werkstückteils eine Überlappung oder eine Kavität vorhanden ist,
- Figur 6: eine schematische Ansicht der Prüfvorrichtung gemäß Figur 1 während einer Messung,
- Figur 7: eine Teilansicht einer alternativen Prüfvorrichtung mit einem Tastsensor,
- Figur 8: einen Verlauf einer Kurve von ersten Bruchtrennoberflächen-Ist-Werten einer ersten Bruchtrennfläche,
- Figur 9: einen Verlauf einer Kurve von zweiten Bruchtrennoberflächen-Ist-Werten einer zweiten (in der Zeichnung oberen) Bruchtrennfläche,

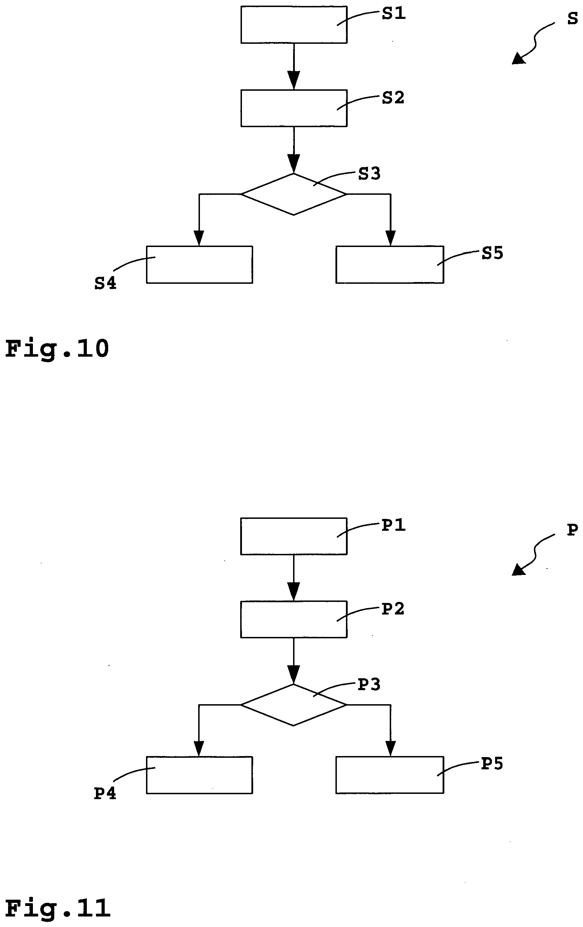

- Figur 10: ein Ablaufdiagramm eines Verfahrens zur Überprüfung einer Außenoberfläche des Werkstücks und
- Figur 11: ein Ablaufdiagramm eines Verfahrens zur Überprüfung von Bruchtrennflächen des Werkstücks.

Bei den nachfolgenden Ausführungsbeispielen sind gleiche oder gleichartige Teile mit denselben Bezugsziffern versehen. Insoweit Unterschiede zwischen den Ausführungsbeispielen bestehen, sind um 100 verschiedene Bezugsziffern verwendet.

Eine in der Zeichnung schematisch dargestellte Werkzeugmaschine 10, die auch ein Bearbeitungszentrum sein kann oder Bestandteil eines Bearbeitungszentrums, weist eine Bruchtrenneinrichtung 11 zum Bruchtrennen von Werkstücken 80 oder Motorbauteilen 81 auf. Die Bruchtrenneinrichtung 11 umfasst Brechwerkzeuge 12, beispielsweise Keile oder dergleichen. Weiterhin ist es möglich, dass die Werkzeugmaschine 10 und das Bearbeitungszentrum ein Kerbwerkzeug, zum Beispiel zum Laser-Kerben, aufweist, was in der Zeichnung jedoch nicht dargestellt ist. Man könnte die Werkzeugmaschine 10 auch als Crack-Maschine bezeichnen.

Die Werkzeugmaschine 10 ist dazu vorgesehen, beispielsweise Pleuel 82 als Werkstücke 80 zu bearbeiten, wobei z.B. ein alternatives Anwendungsfeld der Erfindung auch beispielsweise das Cracken von Zylinderdeckeln von einem Motorblock ist. Auch andere Werkstücke können bruchgetrennt und wie nachfolgend geprüft werden.

Die Pleuel 82 umfassen einen Pleuelschaft 83, der am einen Endbereich ein so genanntes kleines Auge 85, also eine Lagerbohrung oder Lagerausnehmung, sowie ein großes Auge 84 aufweist, ebenfalls eine Lagerbohrung oder Lagerausnehmung. Die beiden Lagerausnehmung oder Augen 84 und 85 sind beispielsweise zur drehbaren Verbindung mit einer Kurbelwelle und einem Kolben vorgesehen (nicht dargestellt).

Im Bereich des großen Auges 84 wird mit der Werkzeugmaschine 10 die nachfolgende Bearbeitung durchgeführt:
Von einem Pleuelfuß 86 wird mittels der Bruchtrenneinrichtung 11 ein Pleueldeckel 87 abgetrennt, beispielsweise durch Eintreiben von Keilen bzw. den Brechwerkzeugen 12, was durch Pfeile schematisch angedeutet ist. Dadurch wird der Pleueldeckel 87 quasi abgesprengt, so dass sich an den Seitenschenkeln 88 des Pleuelfußes 86 und den Seitenschenkeln 89 des Pleueldeckels, die jeweils das große Auge 84 seitlich begrenzen, Bruchtrennflächen 92 und 93 ausbilden. Diese Bruchtrennflächen 92 und 93 passen formschlüssig zueinander, da die Oberflächentopographie bei beiden Bruchtrennflächen im Idealfall identisch ist.

Die Seitenschenkel 88 und 89 werden von eine Montagekanal 90 durchsetzt, beispielsweise einer Bohrung, in den jeweils eine Schraube 91 eingeschraubt werden kann. Der Kopf der Schraube 91 stützt sich dabei beispielsweise oberseitig am Pleueldeckel 87 ab, während der Schaft der Schraube 91 in an sich bekannter Weise in den Montagekanal 90 im Bereich des Seitenschenkels 88 eingeschraubt ist. Eine entsprechende Schraubstation 58 kann Bestandteil der Werkzeugmaschine 10 oder des Bearbeitungszentrums sein.

Es ergeben sich jedoch in der Praxis Probleme, beispielsweise weil die Bruchtrennflächen 92 und 93 nicht optimal zueinander passen und/oder weil seitlich neben der jeweiligen Bruchtrennfläche 92 und 93, also an der Außenoberfläche 94 des Werkstücks 80 neben den Bruchtrennflächen 92 und 93, Ausbrüche 96 oder 196 entstehen.

Wenn also die ersten und zweiten Werkstückteile, nämlich der Pleuelfuß 86 und der Pleueldeckel 87 wieder aneinandergefügt werden, passen möglicherweise die Bruchtrennflächen 92 und 93 nicht formschlüssig aufeinander und/oder sind die Bruchtrennflächen 92 und 93 durch einen oder mehrere Ausbrüche 96 oder 196 sozusagen verkleinert. Ein Ausbruch 96 oder 196 kann sich sogar bis zur Bohrung bzw. bis zum Montagekanal 90 hin erstrecken, so dass der Pleueldeckel 87 nicht in ausreichendem Maße am Pleuelfuß 86 durch die Schrauben 91 gehalten werden kann.

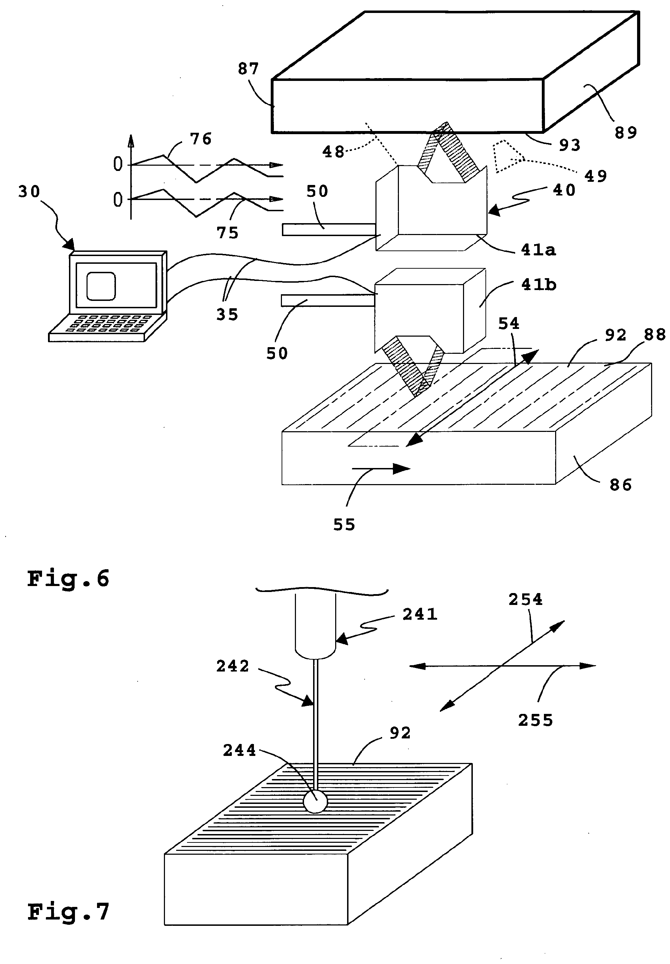

Hier setzt die Erfindung ein. Durch die nachfolgend beschriebenen Prüfvorrichtungen 20, 120 kann eine Prüfung auf Ausbrüche 96 an der Außenoberfläche 94 und/oder der Bruchtrennflächen 92 und 93 durchgeführt werden. In Figur 7 ist noch ein alternatives Ausführungsbeispiel für die Prüfvorrichtungen 20 oder 120 vorgesehen, bei denen ein berührungsbehaftet arbeitender Tastsensor 242 verwendet ist.

Dadurch, dass die Prüfvorrichtung 20 und 120 sowohl die Außenoberfläche 94 im Bereich der Bruchtrennlinie 95 überprüfen können als auch die Bruchtrennflächen 92 und 93, ist ein optimaler Synergieeffekt erzielt. Ein und dieselben Mittel können also beide Prüfungen durchführen. Es versteht sich, dass das Ausführungsbeispiel auch diejenige Variante umfasst, dass die Prüfvorrichtung 20 oder 120 nur eine Überprüfung der Außenoberfläche 94 vornimmt oder nur eine Überprüfung der Bruchtrennflächen 92 und 93.

Die Prüfvorrichtungen 20 und 120 umfassen Sensoranordnungen 40 und 140, die jeweils einen oder mehrere Abstandssensoren 41 und 141 haben, z.B. Abstandssensoren 41a und 41b.

Die Abstandssensoren 41 sind beispielsweise Lasersensoren 42. Bei den Lasersensoren 42 sind in einem Sensorgehäuse 43 sowohl einen Signalgeber 44, nämlich ein Erzeuger für einen Laserstrahl 45, als auch einen Signalempfänger 46 zum Empfangen des von der Außenoberfläche 94 reflektierten Laserstrahls 45r vorgesehen. Dadurch ist ein Abstand 47 zwischen einerseits der Außenoberfläche 94 und andererseits dem Signalempfänger 46 und dem Signalgeber 44 identisch. Dies erhöht die Messgenauigkeit.

Die Lasersensoren 42 sind beispielsweise 2D-Lasersensoren.

Das Sensorgehäuse 43 kann durch einen motorisch angetriebenen Deckel 48 (in Figur 6 angedeutet) verschließbar sein Eine Öffnung, durch die die Signalgeber 44 die Laserstrahlen 45 senden und die Signalempfänger 46 den reflektierten Laserstrahl 45r empfangen, ist vorteilhaft durch den Deckel 48 verschließbar. Während der Erfassung der jeweiligen Oberfläche ist die Öffnung offen, ansonsten jedoch durch den Deckel 48 verschlossen.

Eine Luftauslassöffnung 49 kann dazu vorgesehen sein, die von dem jeweiligen Abstandssensor 41 oder 141 zu erfassende Oberfläche des Werkstücks 80 frei zu blasen und/oder den Abstandssensor 41 oder 141 vor Verschmutzung zu schützen.

Bei anderen Sensortypen als Abstandssensoren sind Schutzgehäuse und/oder motorisch angetriebene Deckel und/oder mindestens eine Luftauslassöffnung auch vorteilhaft.

Die Abstandssensoren 41 sind durch Positioniereinrichtungen 50 relativ zum Werkstück 80 positionierbar, so dass sie beispielsweise an einem Außenumfang der Pleuel 82 im Bereich der Bruchtrennlinien 95, der sich um die Montagekanäle 90 herum erstreckt, positionierbar sind. Somit können die Abstandssensoren quasi ein Oberflächenprofil der Außenoberfläche 94 im Bereich der Bruchtrennlinie 95 abtasten.

Die Positioniereinrichtungen 50 können beispielsweise eine Drehbewegung durchführen (Pfeil 51) und/oder die Abstandssensoren 41 linear (Pfeil 52) auf und ab entlang der Montagekanäle 90 bzw. der sich darum herum erstreckenden Außenoberfläche 94 bewegen. Auf diesem Wege können die Abstandssensoren 41 quasi ein Oberflächenprofil der Außenoberfläche 94 abtasten.

Es versteht sich, dass mit einer geeigneten Positioniereinrichtung auch ein einziger Abstandssensor 41 ausreichen würde. Ferner ist es möglich, dass beispielsweise mehrere Abstandssensoren vorgesehen sind, die ein und dieselbe Außenoberfläche 94 abtasten, z.B. an beiden Paaren der Seitenschenkeln 88, 89 (jeweils neben dem Auge 84), so dass die Erfassung insgesamt schneller geschieht. Beispielsweise können Abstandssensoren kreisförmig oder ringförmig angeordnet sein, so dass sie einen gesamten Außenumfang der Außenoberfläche 94 im Bereich jeweils eines Montagekanals 90 quasi an einem Stück erfassen können.

Selbstverständlich ist es auch möglich, das Werkstück 80 relativ zu den Abstandssensoren 41 zu bewegen. Beispielsweise greift eine Positioniereinrichtung 53 direkt am Pleuelschaft 83 oder an einer anderen Stelle des Pleuels 82 an, um dieses relativ zur Sensoranordnung 40 zu positionieren, beispielsweise linear zu verstellen und/oder zu drehen.

Bei der Sensoranordnung 140 sind die Abstandssensoren 141 als induktive Sensoren 142 ausgestaltet, die in einer Reihenanordnung 148 nebeneinander angeordnet sind.

Die Reihenanordnungen 148 können als Ganzes bzw. als Gruppe durch Positioniereinrichtungen 150 relativ zum Werkstück 80 bewegt werden, also vorzugsweise ebenfalls linear (Pfeil 52) und/oder in Umfangsrichtung (Pfeil 51).

Die Abstandssensoren 141 bzw. induktiven Sensoren 142 haben in ihren Sensorgehäusen 143 Signalgeber 144, nämlich Magnetfelderzeuger, sowie Signalempfänger 146, nämlich Sensoren für ein Magnetfeld, das von den Signalgebern 144 erzeugt und durch die Außenoberfläche 94 beeinflusst und reflektiert wird, so dass auch hier eine optimale Mess-Präzision möglich ist.

An dieser Stelle sei bemerkt, dass es eine vorteilhafte Maßnahme darstellt, jedoch nicht unbedingt notwendig ist, dass Signalgeber und Signalempfänger in ein und demselben Gehäuse angeordnet sind, sondern dass auch eine andere Anordnung ohne weiteres möglich ist.

Vorteilhaft ist es jedenfalls, dass bei den Reihenanordnungen 148 die Abstandssensoren 141 so angeordnet sind, dass sich die Erfassungsbereiche 145 der Abstandssensoren 141 überlappen. Dies kann beispielsweise dazu genutzt werden, dass eine höhere Messgenauigkeit erzielt wird. Weiterhin ist es möglich, dass die Abstandssensoren 141 die Außenoberfläche 94 quasi linienförmig abtasten, entsprechend der Reihenlinie, in der sie in der Reihenanordnung 48 angeordnet sind.

Die Abstandssensoren 41 und/oder 141 können aber auch bezüglich der Bruchtrennflächen 92 und 93 durch die Positioniereinrichtungen 50 und 150 so positioniert werden, dass sie die Bruchtrennflächen 92 und 93 punktweise und/oder matrixartig und/oder zeilenweise abtasten können.

Das ist in Figur 6 angedeutet. Beispielsweise können die beiden ersten und zweiten Werkstückteile, also der Pleuelfuß 86 und der Pleueldeckel 87, voneinander entfernt werden, so dass die Bruchtrennflächen 92 und 93 frei zugänglich sind und die Abstandssensoren 41 oder 141 die Bruchtrennflächen 92 und 93 quasi scannen können, beispielsweise zeilenweise (Pfeil 54) oder auch vollflächig.

Die Positioniereinrichtung 50 oder 150 bewegt beispielsweise die Abstandssensoren 41 oder 141 zeilenweise (Pfeil 54) entlang der Bruchtrennfläche 92 oder 93 und dann mit einem Abstand (Pfeil 55) zur aktuell jeweils eingescannten Zeile eine weitere Zeile.

Ein alternatives Ausführungsbeispiel gemäß Figur 7 sieht vor, dass beispielsweise zum Abtasten der Bruchtrennflächen 92 und/oder der Bruchtrennfläche 93 ein Tastsensor 242, also ein Abstandssensor 241 verwendet wird. Auch dieser Abstandssensor 241 kann die Bruchtrennflächen 92 und 93 zeilenweise abtasten, wobei die einzelnen Abtast-Zeilen in einem Abstand abgetastet werden (Pfeile 254 und 255) . Die Positioniereinrichtungen 50 oder 150 können also auch den Tastsensor 242 entsprechend positionieren bzw. führen. Der Tastsensor 242 hat beispielsweise einen Tastkopf 244, der auf der Bruchtrennflächen 92 oder 93 entlang geführt wird und deren Profil bzw. Topographie abtastet.

Die Sensoranordnungen 40 und 140 sind mit einer Vergleichseinrichtung 30 verbunden, beispielsweise einem Auswertemodul 31, das in einem Speicher 32 eines Computers 33 gespeichert ist. Selbstverständlich kann das Auswertemodul 31 auch mit dem Tastsensor 242 kommunizieren bzw. von diesem Außen- oder Bruchtrennoberflächen-Ist-Konturwerte empfangen.

Weiterhin ist es möglich, dass das Auswertemodul 31 dazu ausgestaltet ist, beispielsweise die Positioniereinrichtungen 50 und/oder 150 und/oder 53 anzusteuern, um die Abtastung bzw. Erfassung der Oberflächenprofile bzw. Oberflächenkonturen der Außenoberfläche 94 und/oder der Bruchtrennflächen 92 und/oder 93 zu steuern.

Das Auswertemodul 31 enthält Programmcode, der von einem Prozessor 34 des Computers 33 ausgeführt werden kann, um das nachfolgend beschriebene Verfahren S zur Überprüfung der Außenoberfläche 94 und/oder der Bruchtrennflächen 92 und 93 durchzuführen.

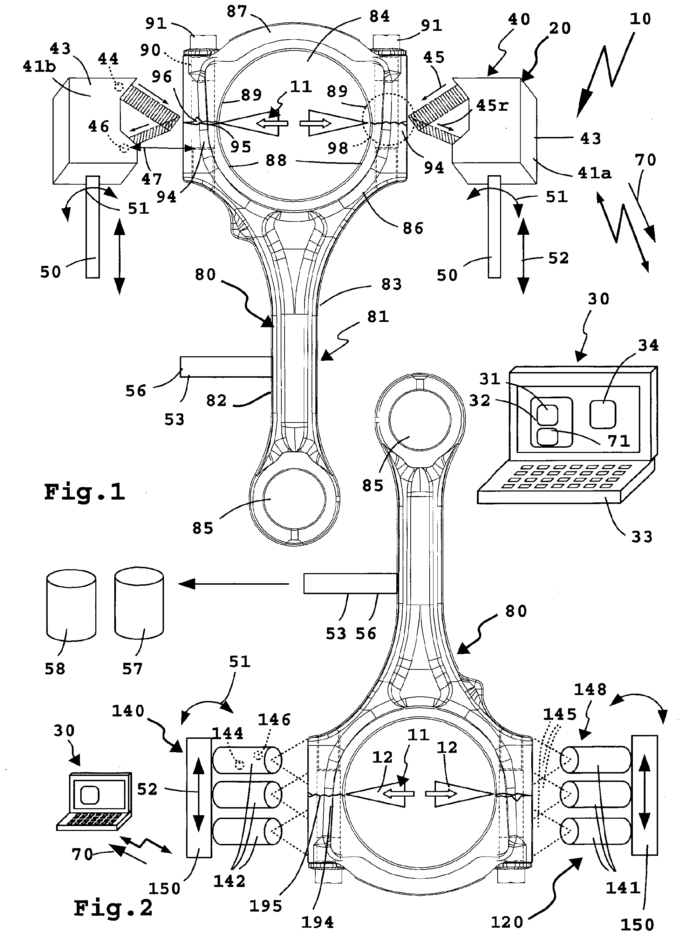

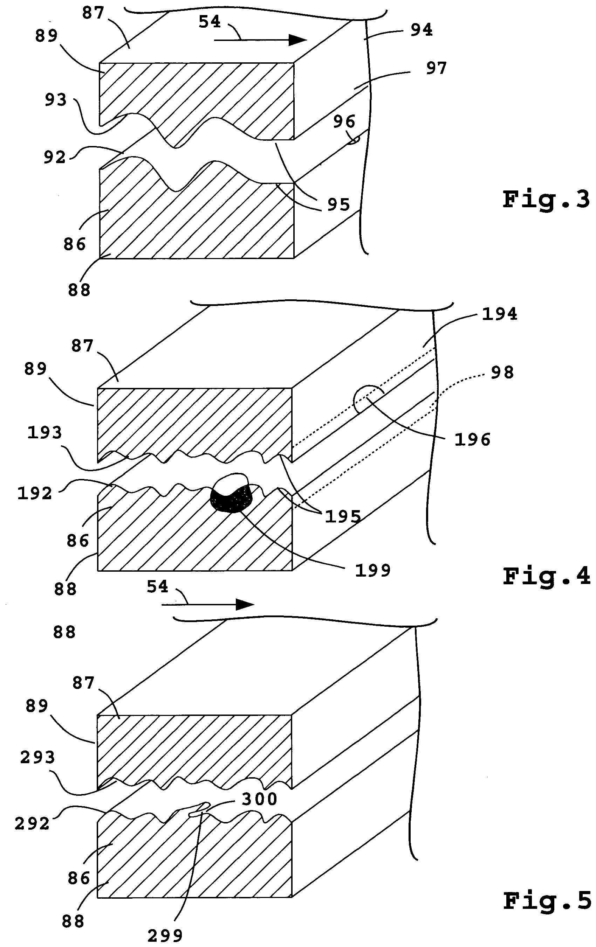

In einem Schritt S1 senden beispielsweise die Sensoranordnungen 40 und/oder 140 Außenoberflächen-Ist-Konturwerte 70, die die Außenoberflächenkontur 97 der in Figur 3 dargestellten Außenoberfläche 94 kennzeichnen an die Vergleichseinrichtung 30 z.B. drahtlos (wie in Figur 1 angedeutet) oder leitungsgebunden über Leitungen 35 (Figur 6).

Man erkennt, dass die Außenoberfläche 94 bei diesem Ausführungsbeispiel intakt ist, also keinen Ausbruch oder nur den kleinen, unproblematischen Ausbruch 96 aufweist.

Ein optionaler Schritt S2 sieht vor, dass die Vergleichseinrichtung 30 zunächst die Außenoberflächen-Ist-Konturwerte 70 normalisiert.

Wenn die Vergleichseinrichtung 30 dann in einem Schritt S3 die Außenoberflächen-Ist-Konturwerte 70 mit Außenoberflächen-Soll-Konturwerten 71 vergleicht, beispielsweise durch eine Differenzbildung, wird die Außenoberfläche 94 als in Ordnung erkannt. Die Außenoberflächen-Soll-Konturwerte 71 sind beispielsweise im Speicher 32 der Vergleichseinrichtung 30 abgelegt.

Die Positioniereinrichtung 53, die eine Aussonderungseinrichtung 56 bilden kann, positioniert also in einem Schritt S4 das Werkstück 80 beispielsweise so, dass es von einer nächsten Arbeitsstation, beispielsweise einer Station zum Ausbohren oder zum Feinbearbeiten des großen Auges 84 übernommen werden kann.

Bei der in Figur 4 dargestellten Außenoberfläche 194 ist der Fall jedoch anders. Beispielsweise ist am zweiten Werkstückteil, dem Pleueldeckel 87, ein Ausbruch 196 vorhanden, der sich von der Bruchtrennlinie 195 weg erstreckt. Der Ausbruch 196 befindet sich in einem zu prüfenden Bereich 98 der Außenoberfläche 194 und hat ein solches Maß, dass er den Bereich 98 sogar überschreitet.

In diesem Fall entscheidet die Vergleichseinrichtung 30 im Schritt S3, dass das entsprechende Werkstück 80 auszusondern ist und weist die Aussonderungseinrichtung 56 entsprechend an, das Werkstück 80 auszusondern, was im Schritt S5 geschieht.

Es versteht sich, dass ergänzend oder alternativ zu dem Vergleich mit den Außenoberflächen-Soll-Konturwerten 71 im Schritt S3 auch eine Stetigkeitsanalyse durchgeführt werden kann. Wenn also beispielsweise die Außenoberflächen-Ist-Konturwerte 70 um ein vorbestimmtes Maß unstetig sind, also eine Bruchkante vorhanden ist, die eine entsprechende Tiefe und/oder Ausdehnung des Ausbruches 96 oder 196 kennzeichnet, ist das entsprechende Werkstück 80 durch die Aussonderungseinrichtung 56 auszusondern.

Auch bei den Bruchtrennflächen 92 und 93 können unerwünschte Ausbrüche, Überlappungen und dergleichen vorhanden sein, was durch die Prüfvorrichtung 120 oder 20 erfasst wird und gegebenenfalls dazu führt, das jeweilige Werkstück 80 anhand der Aussonderungseinrichtung 56 auszusondern. Die Prüfvorrichtung 20, 120 sind zur Durchführung des nachfolgenden Verfahrens P ausgestaltet.

In einem Schritt P1 senden also die Sensoranordnungen 40 oder 140 Bruchtrennoberflächen-Ist-Konturwerte 75, die die Bruchtrennfläche 92 charakterisieren, und Bruchtrennoberflächen-Ist-Konturwerte 76, die die Bruchtrennfläche 93 charakterisieren bzw. deren jeweilige Oberflächenkontur an die Vergleichseinrichtung 30.

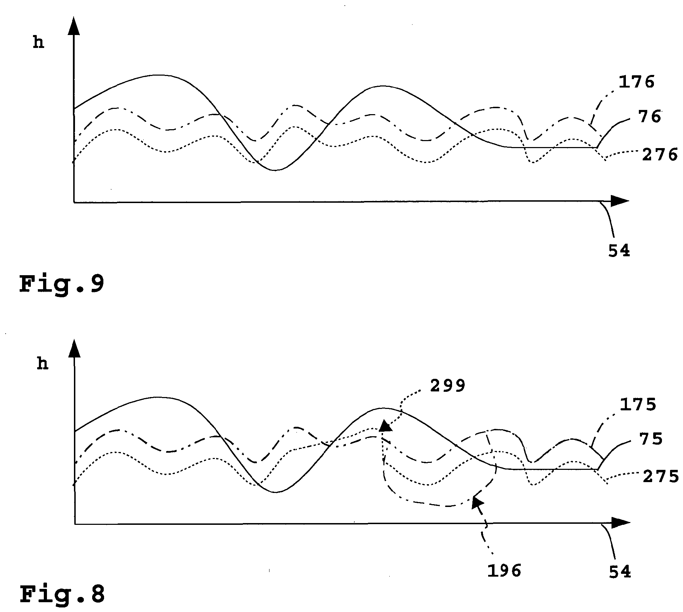

Die Bruchtrennoberflächen-Ist-Konturwerte 75 und 76 sind in den Figuren 8 und 9 jeweils über eine Erfassungszeile 54 dargestellt und kennzeichnen z.B. ein Höhenprofil h der Bruchtrennflächen 92 und 93.

Ein optionaler Schritt P2 sieht vor, dass die Vergleichseinrichtung 30 zunächst die Bruchtrennoberflächen-Ist-Konturwerte 75 und 76 normalisiert.

In einem Schritt P3 vergleicht die Vergleichseinrichtung 30 die Bruchtrennoberflächen-Ist-Konturwerte 75 und 76, bildet also beispielsweise eine Differenz, wobei bei den exakt zueinander passenden Bruchtrennflächen 92 und 93 als Differenz "0" herauskommt, so dass in einem Schritt P4 die Positioniereinrichtung 53 das jeweilige Werkstück 80 an die nächste Station, beispielsweise eine Fügestation 57 und zweckmäßigerweise anschließend eine Schraubstation 58 zum Verschrauben mit den Schrauben 91 weiter positioniert. Das Werkstück 80 ist also in Ordnung, d.h. die beiden Bruchtrennflächen 92 und 93 passen im gewünschten Umfang formschlüssig zueinander und das jeweilige Werkstück 80 ist optimal zu fügen. Die Fügestation 57, die beispielsweise den Pleueldeckel 87 am Pleuelfuß 86 positioniert, ist in der Zeichnung schematisch angedeutet.

Bei dem in Figur 4 angedeuteten Ausführungsbeispiel passen die jeweiligen Bruchtrennflächen 192 und 193 jedoch nicht formschlüssig zueinander. An der in der Zeichnung unteren Bruchtrennfläche 192 ist nämlich ein Ausbruch 199 vorhanden, der eine solche Fläche des zu überprüfenden Kontaktbereichs K einnimmt, dass die Bruchtrennflächen 192 und 193 nicht in ausreichendem Maße formschlüssig aneinander gefügt werden können.

Wenn die Vergleichseinrichtung 30 also im Schritt P3 eine Differenz zwischen den der Bruchtrennfläche 192 zugeordneten ersten Bruchtrennoberflächen-Ist-Konturwerten 175 und den der Bruchtrennfläche 193 zugeordneten zweiten Bruchtrennoberflächen-Ist-Konturwerte 176 bildet, ergibt sich also beispielsweise ein Wert größer 1, was zur Folge hat, dass die Vergleichseinrichtung 30 die Aussonderungseinrichtung 56 in einem Schritt P5 anweist, das jeweilige Werkstück 80 auszusondern.

Wenn die Bruchtrennoberflächen-Ist-Konturwerte 175 und 176 nicht normalisiert sind, kann z.B. sich auch ein Durchschnitts-Differenzwert ergeben, der im wesentlichen konstant ist, jedoch im Bereich des Ausbruches 196 größer als der Durchschnitts-Differenzwert ist.

Ein anderer Fall ist bei dem Ausführungsbeispiel gemäß Figur 5 gegeben. Dort befindet sich im Bereich der in der Zeichnung unteren Bruchtrennfläche 292 ein Überlappungsvorsprung 299, unter der sich wiederum eine Kavität 300 befindet. Wenn der Überlappungsvorsprung 299 abbricht, kann er sich neben die Kavität 300 weg bewegen, was zur Folge hat, dass ein anderer Bereich der Bruchtrennfläche 292 neben der Kavität 300 durch den abgebrochenen Überlappungsvorsprung 299 daran gehindert wird, flächig bzw. formschlüssig in Kontakt mit der gegenüberliegenden Bruchtrennfläche 293 zu gelangen. Auch hier schafft die Erfindung Abhilfe:
Wenn die Vergleichseinrichtung 30 also im Schritt P3 eine Differenz zwischen den der (ersten) Bruchtrennfläche 292 zugeordneten ersten Bruchtrennoberflächen-Ist-Konturwerten 275 und den der (zweiten) Bruchtrennfläche 293 zugeordneten zweiten Bruchtrennoberflächen-Ist-Konturwerte 276 bildet, ergibt sich also beispielsweise ein Wert kleiner 1, was zur Folge hat, dass die Vergleichseinrichtung 30 im Schritt P5 die Aussonderungseinrichtung 56 anweist, das jeweilige Werkstück 80 auszusondern.

In den Figuren 8 und 9 sind beispielhafte Verläufe der Bruchtrennoberflächen-Ist-Konturwerte 75 und 76, 175 und 176 sowie 275 und 276 dargestellt. Man erkennt, das am Ort des Ausbruchs 199 oder des Überlappungsvorsprungs 299 die Bruchtrennoberflächen-Ist-Konturwerte 175 und 176 sowie 275 und 276 entsprechend voneinander abweichen.

Es ist auch möglich, dass die Vergleichseinrichtung 30 die Funktion einer Aussonderungseinrichtung leistet (bei einem oder beiden Verfahren P oder S). Das Auswertemodul 31 kann z.B. das geprüfte Werkstück 80 in einer Werkstückverwaltung als "in Ordnung" oder "nicht in Ordnung" oder mit einer sonstigen, von der obengenannten Prüfung abhängigen Qualitätsinformation versehen, z.B. "sehr gut", "brauchbar", "nacharbeitbar" oder "Ausschuss" versehen. Das Auswertemodul 31 schreibt diese Information z.B. in einen Speicher der Werkstückverwaltung ein, sendet eine entsprechende Nachricht oder dergleichen.

Z.B. kann der Überlappungsvorsprung 299 beispielsweise durch Bürsten entfernt werden, bevor die Bruchtrennoberflächen 292 und 293 zusammengebracht werden.

## Patentansprüche

1. Verfahren zur Prüfung einer Außenoberfläche (94; 194) eines Werkstücks (80), insbesondere eines Motorbauteils (81), z.B. eines Pleuels (82), auf Ausbruch-Flächen, wobei sich die Außenoberfläche (94; 194) neben einer durch ein Bruchtrennen oder Cracken des Werkstücks (80) erzeugten Bruchtrennfläche (92, 93; 192, 193; 292, 293) befindet, umfassend:
- Erfassen einer Außenoberflächenkontur der Außenoberfläche anhand einer Sensoranordnung (40; 140) einer Prüfvorrichtung, wobei mindestens ein Sensor der Sensoranordnung (40; 140) die Außenoberflächenkontur kennzeichnende Außenoberflächen-Ist-Konturwerte (70) ermittelt,
- Vergleichen der Außenoberflächen-Ist-Konturwerte (70) mit Außenoberflächen-Soll-Konturwerten (71) und/oder Durchführen einer Stetigkeitsanalyse bezüglich der Außenoberflächen-Soll-Konturwerte (71) anhand einer
Vergleichseinrichtung (30) der Prüfvorrichtung und,
- Auslösen einer Folgeaktion, insbesondere Aussondern des Werkstücks (80) anhand einer Aussonderungseinrichtung (56), in Abhängigkeit davon, ob bezüglich eines vorbestimmten Bereichs der zu prüfenden Außenoberfläche (94; 194) die Außenoberflächen-Ist-Konturwerte (70) um ein einen Ausbruch charakterisierendes Maß von den Außenoberflächen-Soll-Konturwerten (71) abweichen oder bei der Stetigkeitsanalyse ein einen Ausbruch charakterisierender Unstetigkeitsverlauf der Außenoberflächen-Ist-Konturwerte (70)
festgestellt wird,
**gekennzeichnet dadurch, dass**
die Prüfeinrichtung das den Ausbruch charakterisierende Maß oder den den Ausbruch charaterisierenden
Unstetigkeitsverlauf
von einem durch einen seitlich Versatz von aneinandergefügten
Komponenten des bruchgetrennten Werkstücks verursachten Versatz-Maß oder Versatz-Unstetigkeitsverlauf unterscheidet.

2. Prüfvorrichtung zur Prüfung einer Außenoberfläche eines Werkstücks (80), insbesondere eines Motorbauteils (81), wobei die Prüfvorrichtung (20; 120) zur Ausführung des Verfahrens gemäß Anspruch 1 umfasst:
- eine Sensoranordnung (40; 140) eingerichtet zum Erfassen der Außenoberflächenkontur der Außenoberfläche (94; 194), wobei die Sensoranordnung (40; 140) mindestens einen Sensor eingerichtet zum Ermitteln der die Außenoberflächenkontur kennzeichnende Außenoberflächen-Ist-Konturwerten (70) aufweist,
- eine Vergleichseinrichtung (30) eingerichtet zum Vergleichen der Außenoberflächen-Ist-Konturwerte (70) mit den Außenoberflächen-Soll-Konturwerten (71) und/oder zum Durchführen einer Stetigkeitsanalyse bezüglich der Außenoberflächen-Soll-Konturwerte (71), und eingerichtet zum Auslösen einer Folgeaktion in Abhängigkeit davon, ob bezüglich eines vorbestimmten Bereichs der zu prüfenden Außenoberfläche (94; 194) die Außenoberflächen-Ist-Konturwerte (70) um ein einen Ausbruch charakterisierendes Maß von den Außenoberflächen-Soll-Konturwerten (71) abweichen oder bei der Stetigkeitsanalyse ein einen Ausbruch charakterisierender Unstetigkeitsverlauf der Außenoberflächen-Ist-Konturwerte
(70) festgestellt wird,
**gekennzeichnet dadurch, dass**
die Prüfvorrichtung dazu ausgestaltet ist, das den Ausbruch charakterisierende Maß oder den den Ausbruch charakterisierenden Unstetigkeitsverlauf von einem durch einen seitlichen Versatz von aneinandergefügten Komponenten des bruchgetrennten Werkstücks verursachten Versatz-Maß oder Versatz-Unstetigkeitsverlauf zu unterscheiden.

3. Prüfvorrichtung nach Anspruch 2, **dadurch gekennzeichnet, dass** sie eine Aussonderungseinrichtung (56) zum Aussondern des Werkstücks (80) und/oder eine Markiereinrichtung zum Markieren des Werkstückes (80) und/oder eine Nachbearbeitungseinrichtung zur Nachbearbeitung des Werkstücks (80) aufweist, wenn von der Vergleichseinrichtung (30) bezüglich eines vorbestimmten Bereichs der zu prüfenden Außenoberfläche (94; 194) die Außenoberflächen-Ist-Konturwerte (70) um ein vorbestimmtes Maß von den Außenoberflächen-Soll-Konturwerten (71) abweichen oder bei der Stetigkeitsanalyse ein einen Ausbruch charakterisierender Unstetigkeitsverlauf der Außenoberflächen-Ist-Konturwerte (70) festgestellt wird.

4. Prüfvorrichtung nach Anspruch 2 oder 3, **dadurch gekennzeichnet, dass** der mindestens eine Sensor einen Abstandssensor (41; 141), insbesondere einen induktiven Sensor (142) und/oder einen Lasersensor (42), zur Erfassung eines Abstands zwischen der zu prüfenden Oberfläche und dem Sensor umfasst und/oder einen Sensor zur berührungslosen Erfassung der zu prüfenden Oberfläche umfasst oder dazu ausgestaltet ist.

5. Prüfvorrichtung nach einem der vorhergehenden Ansprüche, **dadurch gekennzeichnet, dass** ein Signalgeber (44; 144), insbesondere eine Laserlichtquelle oder ein Magnetfelderzeuger, zum Senden eines Prüfsignals zur zu prüfenden Oberfläche und ein Signalempfänger (46; 146) oder der mindestens eine Sensor, der zur Erfassung eines von dem Prüfsignal abhängigen, insbesondere von der zu prüfenden Oberfläche des Werkstücks (80) reflektierten, Messsignals, insbesondere eines reflektierten Laserstrahls oder eines Magnetfeldes, vorgesehen ist, in einem gemeinsamen Sensorgehäuse (43; 143) angeordnet sind.

6. Prüfvorrichtung nach einem der vorhergehenden Ansprüche, **dadurch gekennzeichnet, dass** der mindestens eine Sensor einen Tastsensor (242) zum Abtasten der zu prüfenden Oberfläche umfasst.

7. Prüfvorrichtung nach einem der vorhergehenden Ansprüche, **dadurch gekennzeichnet, dass** die Sensoranordnung (40; 140) mindestens zwei Sensoren umfasst, deren Erfassungsbereiche insbesondere sich überlappend nebeneinander angeordnet sind.

8. Prüfvorrichtung nach einem der vorhergehenden Ansprüche, **dadurch gekennzeichnet, dass** sie eine Positioniereinrichtung (50; 150) zum Positionieren des mindestens einen Sensors und des zu prüfenden Werkstücks (80) relativ zueinander aufweist.

9. Prüfvorrichtung nach Anspruch 8, **dadurch gekennzeichnet, dass** die Positioniereinrichtung (50; 150) dazu ausgestaltet ist, den mindestens einen Sensor und das zu prüfende Werkstück (80) so zueinander zu positionieren, dass der mindestens eine Sensor die zu prüfende Oberfläche zeilenweise und/oder punktweise und/oder flächig erfasst.

10. Prüfvorrichtung nach einem der vorhergehenden Ansprüche, **dadurch gekennzeichnet, dass** sie dazu ausgestaltet ist, in einem Bereich nahe einer Bruchtrennlinie zwischen der Außenoberfläche (94; 194) des Werkstücks (80) und der Bruchtrennfläche (92, 93; 192, 193; 292, 293) eine genauere Erfassung der Oberflächenkontur der Außenoberfläche (94; 194) als an einem von der Bruchtrennlinie weiter entfernten Bereich der Außenoberfläche (94; 194) durchzuführen oder umgekehrt weiter entfernt von der Bruchtrennfläche (92, 93; 192, 193; 292, 293) die Außenoberfläche (94; 194) genauer zu prüfen als nahe bei der Bruchtrennlinie.

11. Prüfvorrichtung nach einem der vorhergehenden Ansprüche, **dadurch gekennzeichnet, dass** sie eine Fügeeinrichtung (57) zum Fügen eines ersten und eines zweiten Werkstückteils des Werkstücks (80) derart, dass die Werkstückteile mit ihren Bruchtrennflächen (92, 93; 192, 193; 292, 293) formschlüssig aufeinander liegen und an der zu prüfenden Außenoberfläche (94; 194) eine Bruchtrennlinie ausgebildet ist, aufweist oder hinter einer derartigen Fügeeinrichtung (57) angeordnet ist, wobei sich die zu prüfende Außenoberfläche (94; 194) an dem ersten und/oder dem zweiten Werkstückteil neben der Bruchtrennlinie befindet.

12. Prüfvorrichtung nach einem der vorhergehenden Ansprüche, **dadurch gekennzeichnet, dass** sie einen Bestandteil einer Werkzeugmaschine (10) oder eines Bearbeitungszentrums zur Bearbeitung, insbesondere zum Bruchtrennen oder Cracken, des Werkstücks bildet.

13. Prüfvorrichtung nach einem der vorhergehenden Ansprüche, **dadurch gekennzeichnet, dass** sie zur Prüfung von durch Bruchtrennen oder Cracken erzeugten Bruchtrennflächen (92, 93; 192, 193; 292, 293) des Werkstücks ausgestaltet ist, wobei die Bruchtrennflächen (92, 93; 192, 193; 292, 293) eine erste Bruchtrennfläche (92; 192, 292) an einem ersten Werkstückteil des Werkstücks (80) und eine zum formschlüssigen Fügen an die erste Bruchtrennfläche (92; 192, 292) vorgesehene zweite Bruchtrennfläche (92; 192, 292) an einem zweiten Werkstückteil des Werkstücks (80) umfassen, wobei die Sensoranordnung (40; 140) zum Erfassen der Bruchtrennoberflächenkonturen der ersten Bruchtrennfläche (92; 192, 292) und der zweiten Bruchtrennfläche (92; 192, 292) innerhalb eines Kontaktbereichs, in welchem die Bruchtrennflächen (92, 93; 192, 193; 292, 293) formschlüssig aufeinander liegen sollen, ausgestaltet ist und mindestens einen Sensor zum Ermitteln von die Bruchtrennoberflächenkontur der ersten Bruchtrennfläche (92; 192, 292) in dem Kontaktbereich kennzeichnenden ersten Bruchtrennoberflächen-Ist-Konturwerten (75) und von die Bruchtrennoberflächenkontur der zweiten Bruchtrennfläche (92; 192, 292) in dem Kontaktbereich kennzeichnenden zweiten Bruchtrennoberflächen-Ist-Konturwerten (76) aufweist, und wobei die Vergleichseinrichtung (30) zum Vergleichen der ersten und der zweiten Bruchtrennoberflächen-Ist-Konturwerte (75, 76) ausgestaltet ist, und wobei sie, zum Auslösen einer Folgeaktion, insbesondere) zum Aussondern des Werkstücks (80), in Abhängigkeit davon ausgestaltet ist, ob bezüglich des Kontaktbereichs der Bruchtrennflächen (92, 93; 192, 193; 292, 293), in welchem die Bruchtrennflächen aufeinander formschlüssig liegen sollen, die ersten und zweiten Bruchtrennoberflächen-Ist-Konturwerte (75, 76) um ein vorbestimmtes Maß voneinander abweichen.

14. Prüfvorrichtung nach Anspruch 13, **dadurch gekennzeichnet, dass** sie dazu ausgestaltet ist, in einem Zentralbereich der zu prüfenden Bruchtrennfläche (92, 93; 192, 193; 292, 293) eine genauere Erfassung der Bruchtrennoberflächenkontur durchzuführen als an einem Randbereich nahe einer nicht durch Bruchtrennung bearbeiteten Oberfläche des Werkstücks (80) durchzuführen.

15. Prüfvorrichtung nach Anspruch 13 oder 14, **dadurch gekennzeichnet, dass** die Vergleichseinrichtung (30) dazu ausgestaltet ist, bei dem Vergleichen der ersten und der zweiten Bruchtrennoberflächen-Ist-Konturwerte (75, 76) einen Differenzwert zwischen den ersten und der zweiten Bruchtrennoberflächen-Ist-Konturwerten (75, 76) zu bilden, und die Aussonderungseinrichtung (56) dazu ausgestaltet ist, die Entscheidung zur Aussonderung des Werkstücks (80) anhand des Differenzwertes zu treffen.

## Claims

1. Method for checking an outer surface (94; 194) of a workpiece (8), in particular an engine component (81) such as a connecting rod (82), for chipped areas, wherein the outer surface (94; 194) is adjacent to a fracture-separation surface (92, 93; 192, 193; 292, 293) generated by a fracture-separation or cracking of the workpiece (80), the method comprising:
- the detection of an outer surface contour of the outer surface using a sensor assembly (40; 140) of a checking device, wherein at least one sensor of the sensor assembly (40; 140) detects outer surface actual contour values (70) characteristic for the outer surface contour,
- the comparison of the outer surface actual contour values (70) to outer surface set contour values (71) and/or the performance of a consistency analysis relating to the outer surface set contour values (71) using a comparison device (30) of the checking device, and
- the triggering of a follow-up action, in particular the rejection of the workpiece (80) using a rejection device (56), depending on whether, with respect to a preset region of the outer surface (94; 194) to be checked, the outer surface actual contour values (70) deviate from the outer surface set contour values (71) by a measure which is characteristic for chipping, or whether an inconsistency behaviour of the outer surface actual contour values (70) which is characteristic for chipping is detected in the consistency analysis,
**characterised in that**
- the checking device distinguishes the measure which is characteristic for the chipping or the inconsistency behaviour which is characteristic for the chipping from an offset measure or offset inconsistency behaviour caused by a lateral offset of joined components of the fracture-separated workpiece.

2. Checking device for checking an outer surface of a workpiece (8), in particular an engine component (81), wherein the checking device (20; 120) for carrying out the method according to claim 1 comprises:
- a sensor assembly (40; 140) designed to detect the outer surface contour of the outer surface (94; 194), the sensor assembly (40; 140) having at least one sensor for detecting outer surface actual contour values (70) characteristic for the outer surface contour,
- a comparison device (30) designed to compare the outer surface actual contour values (70) to the outer surface set contour values (71) and/or to carry out a consistency analysis relating to the outer surface set contour values (71) and to trigger a follow-up action, depending on whether, with respect to a preset region of the outer surface (94; 194) to be checked, the outer surface actual contour values (70) deviate from the outer surface set contour values (71) by a measure which is characteristic for chipping, or whether an inconsistency behaviour of the outer surface actual contour values (70) which is characteristic for chipping is detected in the consistency analysis, **characterised in that**
the checking device is designed to distinguish the measure which is characteristic for the chipping or the inconsistency behaviour which is characteristic for the chipping from an offset measure or offset inconsistency behaviour caused by a lateral offset of joined components of the fracture-separated workpiece.

3. Checking device according to claim 2, **characterised in that** is comprises a rejection device (56) for rejecting the workpiece (80) and/or a marking device for marking the workpiece (80) and/or a remachining device for remachining the workpiece (80) if the comparison device (30) detects that, with respect to a preset region of the outer surface (94; 194) to be checked, the outer surface actual contour values (70) deviate from the outer surface set contour values (71) by a predetermined measure, or if an inconsistency behaviour of the outer surface actual contour values (70) which is characteristic for chipping is detected in the consistency analysis.

4. Checking device according to claim 2 or 3, **characterised in that** the at least one sensor comprises or is designed as a distance sensor (41; 141), in particular an inductive sensor (142) and/or a laser sensor (42), for detecting a distance between the surface to be checked and the sensor, and/or a sensor for the contactless assessment of the surface to be checked.

5. Checking device according to any of the preceding claims, **characterised in that** a signal generator (44; 144), in particular a laser light source or a magnetic field generator, for transmitting a check signal of the surface to be checked, and a signal receiver (46; 146) or the at least one sensor provided to detect a measurement signal depending on the check signal and in particular reflected by the surface to be checked of the workpiece (80), in particular of a reflected laser beam or a magnetic field, are located in a common sensor housing (43; 143).

6. Checking device according to any of the preceding claims, **characterised in that** the at least one sensor comprises a tactile sensor (242) for scanning the surface to be checked.

7. Checking device according to any of the preceding claims, **characterised in that** the sensor assembly (40; 140) comprises at least two sensors the detection ranges of which are arranged adjacent to and in particular overlapping each other.

8. Checking device according to any of the preceding claims, **characterised in that** it has a positioning device (50; 150) for positioning the at least one sensor and the workpiece (80) to be checked relative to each other.

9. Checking device according to claim 8, **characterised in that** the positioning device (50; 150) is designed to position the at least one sensor and the workpiece (80) to be checked in such a way that the at least one sensor scans the surface to be checked line by line and/or point by point and/or two-dimensionally.

10. Checking device according to any of the preceding claims, **characterised in that** it is designed to scan the surface contour of the outer surface (94; 194) more precisely in a region near a fracture-separation line between the outer surface (94; 194) of the workpiece (80) and the fracture-separation surface (92, 93; 192, 193; 292, 293) than in a region of the outer surface (94; 194) which is more distant from the fracture-separation line, or in reverse to scan the outer surface (94; 194) more precisely at a greater distance from the fracture-separation surface (92, 93; 192, 193; 292, 293) than near the fracture-separation line.

11. Checking device according to any of the preceding claims, **characterised in that** it has a joining device (57) for joining a first and a second workpiece part of the workpiece (80) in such a way that the workpiece parts positively lie on top of each other with their fracture-separation surfaces (92, 93; 192, 193; 292, 293) and a fracture-separation line is formed at the outer surface (94; 194) to be checked, or **in that** it is located behind such a joining device (57), wherein the outer surface (94; 194) to be checked is located at the first and/or the second workpiece part adjacent to the fracture-separation line.

12. Checking device according to any of the preceding claims, **characterised in that** it forms a part of a machine tool (10) or a machining centre for machining, in particular fracture-separating or cracking, the workpiece.

13. Checking device according to any of the preceding claims, **characterised in that** it is designed to check fracture-separation surfaces (92, 93; 192, 193; 292, 293) of the workpiece generated by a fracture-separation or cracking, wherein the fracture-separation surfaces (92, 93; 192, 193; 292, 293) comprise a first fracture-separation surface (92; 192; 292) at a first workpiece part of the workpiece (80) and a second fracture-separation surface (92; 192; 292) at a second workpiece part of the workpiece (80), which is provided for positive joining to the first fracture-separation surface (92; 192; 292), wherein the sensor assembly (40; 140) is designed to detect the fracture-separation surface contours of the first fracture-separation surface (92; 192; 292) and the second fracture-separation surface (92; 192; 292) within a contact region where the fracture-separation surfaces (92, 93; 192, 193; 292, 293) are to lie positively on each other and comprises at least one sensor for the detection of first fracture-separation actual contour values (75) characteristic for the fracture-separation surface contour of the first fracture-separation surface (92; 192; 292) in the contact region and of second fracture-separation actual contour values (76) characteristic for the fracture-separation surface contour of the second first fracture-separation surface (92; 192; 292) in the contact region, and wherein the comparison device (30) is designed to compare the first and the second fracture-separation actual contour values (75, 76), and wherein it is designed to trigger a follow-up action, in particular the rejection of the workpiece (80), depending on whether, with respect to the contact region of the fracture-separation surfaces (92, 93; 192, 193; 292, 293) where the fracture-separation surfaces are to lie positively on top of each other, the first and the second fracture-separation actual contour values (75, 76) deviate from each other by a predetermined measure.

14. Checking device according to claim 13, **characterised in that** it is designed to scan the fracture-separation surface contour more precisely in a central region of the fracture-separation surface (92, 93; 192, 193; 292, 293) to be checked than in a marginal region near a surface of the workpiece (80) which has not been subjected to fracture-separation.

15. Checking device according to claim 13 or 14, **characterised in that** the comparison device (30) is designed to form a differential value between the first and the second fracture-separation actual contour values (75, 76) when comparing the first and the second fracture-separation actual contour values (75, 76), and **in that** the rejection device (56) is designed to make a decision on the rejection of the workpiece (80) on the basis of the differential value.

## Revendications

1. Procédé servant à vérifier la présence de faces de cassure sur une surface extérieure (94 ; 194) d'une pièce (80), en particulier d'un composant de moteur (81), par exemple d'une bielle (82), dans lequel la surface extérieure (94 ; 194) se trouve à côté d'une face de séparation par rupture (92, 93 ; 192, 193 ; 292, 293) produite par une séparation par rupture ou par un craquage de la pièce (80), comprenant :
- la détection d'un contour de surface extérieure d'une surface extérieure à l'aide d'un ensemble de capteurs (40 ; 140) d'un dispositif de vérification, dans lequel au moins un capteur de l'ensemble de capteurs (40 ; 140) détermine des valeurs de contour réelles de surface extérieure (70) caractérisant le contour de surface extérieure,
- la comparaison des valeurs de contour réelles de surface extérieure (70) à des valeurs de contour théoriques de surface extérieure (71) et/ou la mise en œuvre d'une analyse de continuité par rapport aux valeurs de contour théoriques de surface extérieure (71) à l'aide d'un système de comparaison (30) du dispositif de vérification et
- le déclenchement d'une action consécutive, en particulier le tri de la pièce (80) à l'aide d'un système de tri (56) selon que, par rapport à une zone prédéfinie de la surface extérieure (94 ; 194) à vérifier, les valeurs de contour réelles de surface extérieure (70) divergent d'une mesure caractérisant une cassure des valeurs de contour théoriques de surface extérieure (71) ou qu'une évolution discontinue, caractérisant une cassure, des valeurs de contour réelles de surface extérieure (70) est constatée lors de l'analyse de continuité, **caractérisé en ce que**
- le système de vérification distingue la mesure caractérisant la cassure ou l'évolution discontinue caractérisant la cassure d'une mesure de décalage ou d'une évolution discontinue de décalage provoquée par un décalage latéral de composants assemblés les uns aux autres de la pièce séparée par rupture.

2. Dispositif de vérification servant à vérifier une surface extérieure d'une pièce (80), en particulier d'un composant de moteur (81), dans lequel le dispositif de vérification (20 ; 120) comprend aux fins de l'exécution du procédé selon la revendication 1 :
- un ensemble de capteurs (40 ; 140) mis au point pour détecter le contour de surface extérieure de la surface extérieure (94 ; 194), dans lequel l'ensemble de capteurs (40; 140) présente au moins un capteur mis au point pour déterminer les valeurs de contour réelles de surface extérieure (70) caractérisant le contour de surface extérieure,
- un système de comparaison (30) mis au point pour comparer les valeurs de contour réelles de surface extérieure (70) aux valeurs de contour théoriques de surface extérieure (71) et/ou pour mettre en œuvre une analyse de continuité par rapport aux valeurs de contour théoriques de surface extérieure (71), et mis au moins pour déclencher une action consécutive selon que, par rapport à une zone prédéfinie de la surface extérieure (94; 194) à vérifier, les valeurs de contour réelles de surface extérieure (70) divergent d'une mesure caractérisant une cassure des valeurs de contour théoriques de surface extérieure (71) ou une évolution de discontinuité, caractérisant une cassure, des valeurs de contour réelles de surface extérieure (70) est constatée lors de l'analyse de continuité,
**caractérisé en ce que**
le dispositif de vérification est configuré pour distinguer la mesure caractérisant la cassure ou l'évolution discontinue caractérisant la cassure d'une mesure de décalage ou d'une évolution discontinue de décalage provoquée par un décalage latéral de composants assemblés les uns aux autres de la pièce séparée par rupture.

3. Dispositif de vérification selon la revendication 2, **caractérisé en ce qu'**il présente un système de tri (56) servant à trier la pièce (80) et/ou un système de marquage servant à marquer la pièce (80) et/ou un système d'usinage ultérieur servant à usiner ultérieurement la pièce (80) quand le système de comparaison (30) constate concernant une zone prédéfinie de la surface extérieure (94 ; 194) à vérifier une divergence des valeurs de contour réelles de surface extérieure (70) d'une mesure prédéfinie par rapport aux valeurs de contour théoriques de surface extérieure (71) ou une évolution discontinue, caractérisant une cassure, des valeurs de contour réelles de surface extérieure (70) lors de l'analyse de continuité.

4. Dispositif de vérification selon la revendication 2 ou 3, **caractérisé en ce que** l'au moins un capteur comprend un capteur de distance (41 ; 141), en particulier un capteur inductif (142), et/ou un capteur laser (42) servant à détecter une distance entre la surface à vérifier et le capteur et/ou comprend un capteur servant à et/ou configuré pour détecter sans contact la surface à vérifier.

5. Dispositif de vérification selon l'une quelconque des revendications précédentes, **caractérisé en ce que** sont disposés dans un boîtier de capteur (43 ; 143) commun un émetteur de signaux (44 ; 144), en particulier une source de lumière laser ou un générateur de champ magnétique, servant à envoyer un signal de vérification vers la surface à vérifier et un récepteur de signaux (46 ; 146) ou l'au moins un capteur, qui est prévu pour détecter un signal de mesure dépendant du signal de vérification, en particulier réfléchi par la surface à vérifier de la pièce (80), en particulier un faisceau laser réfléchi ou un champ magnétique.

6. Dispositif de vérification selon l'une quelconque des revendications précédentes, **caractérisé en ce que** l'au moins un capteur comprend un capteur de balayage (242) servant à balayer la surface à vérifier.

7. Dispositif de vérification selon l'une quelconque des revendications précédentes, **caractérisé en ce que** l'ensemble de capteurs (40 ; 140) comprend au moins deux capteurs, dont les zones de détection sont disposées côte à côte en particulier en se chevauchant.

8. Dispositif de vérification selon l'une quelconque des revendications précédentes, **caractérisé en ce qu'**il présente un système de positionnement (50 ; 150) servant à positionner l'au moins un capteur et la pièce (80) à vérifier l'un par rapport à l'autre.

9. Dispositif de vérification selon la revendication 8, **caractérisé en ce que** le système de positionnement (50; 150) est configuré pour positionner l'au moins un capteur et la pièce (80) à vérifier l'un par rapport à l'autre de telle sorte que l'au moins un capteur détecte ligne par ligne et/ou point par point et/ou en surface la surface à vérifier.

10. Dispositif de vérification selon l'une quelconque des revendications précédentes, **caractérisé en ce qu'**il est configuré pour mettre en œuvre dans une zone à proximité de la ligne de séparation par rupture entre la surface extérieure (94 ; 194) de la pièce (80) et la face de séparation par rupture (92, 93 ; 192, 193 ; 292, 293) une détection plus précise du contour de surface de la surface extérieure (94 ; 194) qu'au niveau d'une zone, davantage éloignée de la ligne de séparation par rupture, de la surface extérieure (94; 194) ou, inversement, pour vérifier de manière davantage éloignée de la face de séparation par rupture (92, 93 ; 192, 193 ; 292, 293) la surface extérieure (94 ; 194) plus précisément qu'à proximité de la ligne de séparation par rupture.

11. Dispositif de vérification selon l'une quelconque des revendications précédentes, **caractérisé en ce qu'**il présente un système d'assemblage (57) servant à assembler une première et une deuxième partie de pièce de la pièce (80) de telle manière que les parties de pièce reposent les unes sur les autres par complémentarité de forme par leurs surfaces de séparation par rupture (92, 93 ; 192, 193 ; 292, 293) et qu'une ligne de séparation par rupture est réalisée au niveau de la surface extérieure (94 ; 194) à vérifier, ou est disposée derrière un système d'assemblage (57) de ce type, dans lequel la surface extérieure (94 ; 194) à vérifier se trouve au niveau de la première et/ou au niveau de la deuxième partie de pièce à côté de la ligne de séparation par rupture.

12. Dispositif de vérification selon l'une quelconque des revendications précédentes, **caractérisé en ce qu'**il forme un élément constitutif d'une machine-outil (10) ou d'un centre d'usinage servant à usiner, en particulier à séparer par rupture ou à craquer, la pièce.

13. Dispositif de vérification selon l'une quelconque des revendications précédentes, **caractérisé en ce qu'**il est configuré pour vérifier des faces de séparation par rupture (92, 93 ; 192, 193 ; 292 ; 293) produites par séparation par rupture ou par craquage, de la pièce, dans lequel les surfaces de séparation par rupture (92, 93 ; 192, 193 ; 292, 293) comprennent une première face de séparation par rupture (92 ; 192, 292) au niveau d'une première partie de pièce de la pièce (80) et une deuxième face de séparation par rupture (92 ; 192, 292) prévue pour être assemblée par complémentarité de forme au niveau de la première face de séparation par rupture (92; 192, 292) au niveau d'une deuxième partie de pièce de la pièce (80), dans lequel l'ensemble de capteurs (40 ; 140) est configuré pour détecter les contours de surfaces de séparation par rupture de la première face de séparation par rupture (92 ; 192, 292) et de la deuxième face de séparation par rupture (92 ; 192, 292) à l'intérieur d'une zone de contact, dans laquelle les faces de séparation par rupture (92, 93 ; 192, 193 ; 292, 293) doivent se situer les unes sur les autres par complémentarité de forme et présente au moins un capteur servant à déterminer des premières valeurs de contour réelles de surface de séparation par rupture (75) caractérisant le contour de surface de séparation par rupture de la première face de séparation par rupture (92 ; 192, 292) dans la zone de contact et des deuxièmes valeurs de contour réelles de surface de séparation par rupture (76) caractérisant le contour de surface de séparation par rupture de la deuxième face de séparation par rupture (92 ; 192, 292) dans la zone de contact, et dans lequel le système de comparaison (30) est configuré pour comparer les premières et les deuxièmes valeurs de contour réelles de surface de séparation par rupture (75, 76), et dans lequel il est configuré pour déclencher une action consécutive, en particulier pour trier la pièce (80) selon que par rapport à la zone de contact des faces de séparation par rupture (92, 93 ; 192, 193 ; 292, 293), dans laquelle les faces de séparation par rupture sont censées se situer les unes sur les autres par complémentarité de forme, les premières et deuxièmes valeurs de contour réelles de surface de séparation par rupture (75, 76) divergent d'une mesure prédéfinie les unes des autres.

14. Dispositif de vérification selon la revendication 13, **caractérisé en ce qu'**il est configuré pour mettre en œuvre dans une zone centrale de la face de séparation par rupture (92, 93 ; 192, 193 ; 292, 293) à vérifier une détection plus précise du contour de surface de séparation par rupture qu'au niveau d'une zone de bord à proximité d'une surface non usinée par séparation par rupture de la pièce (80).

15. Dispositif de vérification selon la revendication 13 ou 14, **caractérisé en ce que** le système de comparaison (30) est configuré pour obtenir lors de la comparaison des premières et des deuxièmes valeurs de contour réelles de surface de séparation par rupture (75, 76) une valeur de différence entre les premières et les deuxièmes valeurs de contour réelles de surface de séparation par rupture (75, 76), et le système de tri (56) est configuré pour décider du tri de la pièce (80) à l'aide de la valeur de différence.
